(19) Europäisches Patentamt
European Patent Office
Office européen des brevets

(11) Veröffentlichungsnummer: **0 345 550**
**A2**

# (12) EUROPÄISCHE PATENTANMELDUNG

(21) Anmeldenummer: **89109456.7**

(22) Anmeldetag: **25.05.89**

(51) Int. Cl.⁴: **C08G 75/02 , C08J 5/18 , D01F 6/76**

(30) Priorität: **08.06.88 DE 3819478**

(43) Veröffentlichungstag der Anmeldung:
**13.12.89 Patentblatt 89/50**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Heinz, Hans-Detlef, Dr.**
**Breslauer Strasse 31**
**D-4150 Krefeld 11(DE)**
Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**
Erfinder: **Reinking, Klaus, Dr.**
**Robert-Stolz-Strasse 16b**
**D-5632 Wermelskirchen(DE)**
Erfinder: **Sommer, Alexa, Dr.**
**Morgengraben 3**
**D-5000 Köln 80(DE)**

(54) **Hochmolekulare Arylensulfidpolymere.**

(57) Die Erfindung betrifft neue hochmolekulare Arylensulfidpolymere mit gegebenenfalls zusätzlich verbesserter Beständigkeit gegen UV-Strahlung, hergestellt durch Aufschmelzen von Arylensulfidpolymeren, vorzugsweise PPS, mit Polynitroverbindungen, bzw. mit Mononitroverbindungen, die mindestens einen weiteren zur Reaktion mit dem Arylensulfidpolymeren befähigten Substituenten tragen.

EP 0 345 550 A2

## Hochmolekulare Arylensulfidpolymere

Die Erfindung betrifft neue hochmolekulare Arylensulfidpolymere mit gegebenenfalls zusätzlich verbesserter Beständigkeit gegen UV-Strahlung, hergestellt durch Aufschmelzen von Arylensulfidpolymeren, vorzugsweise PPS, mit Polynitroverbindungen, bzw. mit Mononitroverbindungen, die mindestens einen weiteren zur Reaktion mit dem Arylensulfidpolymeren befähigten Substituenten tragen.

Arylensulfidpolymere sind inerte, hochtemperaturbeständige Thermoplaste, die bis zu einem hohen Prozentsatz mit Glasfasern und/oder mineralischen Füllstoffen abgemischt werden können.

Der Einsatz dieser Polymeren, insbesondere des Polyparaphenylensulfids (PPS), nimmt vor allem in Bereichen, die bislang Duroplasten vorbehalten waren, zu.

Ein Nachteil dieser Polymeren liegt jedoch in ihrer für manche Anwendungen ungenügenden Zähigkeit, die aber mit steigendem Molekulargewicht zunimmt. Für eine Reihe von Anwendungen kann die sehr hohe Kristallisationsgeschwin digkeit dieser Polymeren von Nachteil sein, so z.B. bei der Herstellung von Folien. Hochmolekulare PPS-Typen zeichnen sich hier z.B. durch eine verringerte Kristallisationsgeschwindigkeit aus.

Höhermolekulare lineare und verzweigte PPS-Typen sowie Verfahren zu ihrer Herstellung sind bekannt (z.B. US-PS 3 354 129, EP-OS 171 021).

Aus der US-PS 3 524 835 ist bekannt, das Molekulargewicht von Polyphenylensulfiden durch eine oxidative Nachkondensation mit Luft zu erhöhen. Varianten dieses Verfahrens, bzw. Verbesserungen einzelner Schritte werden z.B. in der US-PS 3 793 256, in der EP-OS 53 385, EP-OS 64 300, EP-OS 91 088 und der US-PS 3 699 087 beschrieben.

Nachteilig bei diesen Verfahren ist, daß es sich um ein heterogenes Reaktionssystem handelt, in dem das in seinem Molekulargewicht zu erhöhende Arylensulfidpolymer als feste und das Oxidationsmittel als gasförmige Phase vorliegen. Ein solches System kann zu einer inhomogenen Erhöhung des Molekulargewichts führen. Es können Vergelungen, Inhomogenität des Granulats und gegebenenfalls schlecht reproduzierbare Verarbeitbarkeit resultieren.

Gasförmige Oxidationsmittel können weiterhin unter Umständen nur aufwendig dosiert werden.

Aus der US-PS 3 839 301 ist ein Verfahren zur Molekulargewichtserhöhung von PPS unter Verwendung von Disulfonsäuren bzw. Disulfonsäurederivaten wie z.B. Chloriden, bekannt. Diese Agenzien können jedoch eine unkontrollierbar schnelle Erhöhung der Schmelzviskosität bei der Nachbehandlung bewirken, so daß auf diese Weise eine reproduzierbare Viskositätserhöhung erschwert sein kann.

Aus der EP-OS 53 344 sind spezielle Arylensulfidcopolymere bekannt, wobei als Comonomere auch Nitrohalogenaromaten in Frage kommen. Diese werden als Comonomere in das Polymere eingebaut. Die so entstandenen PPS-Typen sollen eine verringerte Neigung zur oxidativen Nachkondensation haben.

Es wurde nun gefunden, daß ausgewählte Polynitroverbindungen bzw. Mononitroverbindungen, welche mindestens einen weiteren, mit dem Polymeren zur Reaktion befähigten Substituenten aufweisen, in Arylensulfidpolymere homogen eingearbeitet, eine schnelle, aber kontrollierbare Erhöhung der Schmelzviskosität bewirken, wobei die entstandenen Polyarylensulfide eine deutlich verbesserte Beständigkeit gegen UV-Strahlung besitzen können.

Gegenstand der Erfindung sind daher neue hochmolekulare Arylensulfidpolymere, vorzugsweise Polyphenylensulfide, mit gegebenenfalls zusätzlich verbesserter Stabilität gegen UV-Strahlung, hergestellt durch Umsetzung in der Schmelze von 80 bis 99,9 Gew.-.%, bevorzugt 85-99,5 Gew.-% und besonders bevorzugt 88-99 Gew.-% Arylensulfidpolymeren, bevorzugt Polyphenylensulfid (PPS), aus Bausteinen der Formeln (I)-(V),

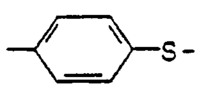 , 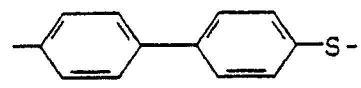 ,

(I) (II)

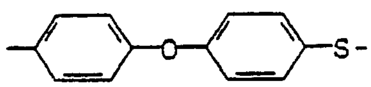 , 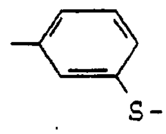 ,

(III) (IV)

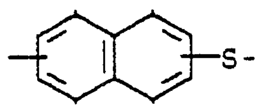 ,

(V)

die gegebenenfalls weitere, bekannte Comonomere enthalten können, wie z.B.

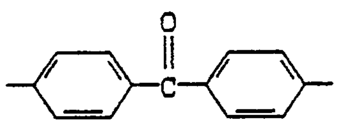 , 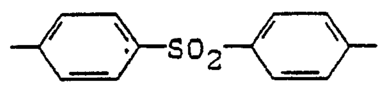

mit 0,1-20 Gew.-%, bevorzugt 0,5-15 Gew.-%, besonders bevorzugt 1-12 Gew.-% spezieller hochsiedender aromatischer, vorzugsweise halogenfreier Polynitroverbindungen und/oder Mononitroverbindungen, welche mindestens einen weiteren, zur Reaktion mit dem Arylensulfidpolymeren befähigten Substituenten wie z.B. -SH, $-SO_2Cl$, $-SO_3^{\ominus}K^{\oplus}$ aufweisen, wobei die Siedepunkte der Nitroverbindungen mindestens 250° C und bevorzugt mindestens 300° C betragen sollen und wobei für den Fall, daß in den Mononitroverbindungen der weitere zur Reaktion mit dem Arylensulfidpolymeren befähigte Substituent eine $SO_3^{\ominus}$-Gruppe enthält, nur 3-Nitrobenzolsulfonsäure-Natrium salz, 3-Nitrobenzolsulfonsäure-Kalium-Salz, 3-Nitrobenzolsulfonsäure-Calcium-Salze, 3-Nitro-benzolsulfonsäure-Magnesium-Salze, 2-Nitrobenzolsulfonsäure-Kalium-Salz, 2-Nitrobenzolsulfonsäure-Natrium-Salz, 2-Methyl-5-nitrobenzolsulfonsäure-Natrium-(Kalium)-Salz, 4-Methyl-3-nitrobenzolsulfonsäure-Natrium-(Kalium)-Salz, 5-Nitro-2-naphthalinsulfonsäure-Natrium-(Kalium, Ammonium)-Salz eingesetzt werden.

In einer besonderen Ausführungsform kann die Umsetzung zur Herstellung der erfindungsgemäßen Arylensulfidpolymeren, vorzugsweise Polyphenylensulfiden, nach der Schmelzereaktion in einer Festphasennachbehandlung bei Temperaturen von 180-260° C, bevorzugt 220-260° C, weitergeführt werden.

Aus der DE-OS 2 903 100 ist bekannt, Sulfonatsalze, die auch Nitrogruppen enthalten können, als Flammschutzmittel Polyphenylensulfid beizumischen. Von diesen sind jedoch nur bestimmte Nitrogruppenhaltige Sulfonate wie 3-Nitrobenzolsulfonsäure-Natrium (Kalium, Magnesium, Calcium)-Salz, 2-Nitrobenzolsulfonsäure-Natrium (Kalium, Magnesium,Calcium)-Salz erfindungsgemäß einsetzbar.

Die Herstellung der erfindungsgemäßen Arylensulfidpolymeren kann in der Schmelze, z.B. in Extrudern, Knetern oder anderen dazu geeigneten Vorrichtungen, gegebenenfalls bei höherem Druck bei einer Temperatur von ca 250 bis 450° C, bevorzugt 300 bis 360° C, erfolgen.

Beispiele für Substituenten, die zur Reaktion mit den Arylensulfidpolymeren befähigt sind, sind -SH, $-NO_2$, $-SO_3H$, $-SO_2Cl$, $-SO_2NH_2$, $-SO_3^{\ominus}K^{\oplus}$, $-SO_3^{\ominus}Na^{\oplus}$ und -NH-Ar, wobei Ar einen gegebenenfalls substituierten Arylrest mit 6-14 C-Atomen wie z.B. den Phenyl-Rest bedeutet.

Mononitroverbindungen, die erfindungsgemäß eingesetzt werden können, sind z.B. 3-Nitrobenzolsulfonsäure, 4-Nitrobenzolsulfonsäure, 3-Nitrobenzolsulfonsäurechlorid, 3-Nitrobenzolsulfonamid, Kalium-3-nitrobenzolsulfonat, Natrium-3-nitrobenzolsulfonat, 3-Mercaptonitrobenzol, 3-Nitro-4-toluolsulfonsäure, 3-Nitro-4-toluolsulfonamid, 3-Nitro-4-toluolsulfonsäurebutylamid, 3-Nitro-4-toluolsulfonsäurechlorid, Kalium-3-nitro-4-toluolsulfonat, Natrium-3-nitro-4-toluolsulfonat, 3-Mercapto-4-methylnitrobenzol, Kalium-2-nitrobenzolsulfonat, 2-Nitrobenzolsulfonsäurechlorid, 4-Nitrobenzolsulfonsäurechlorid, 4-Chlor-3-nitrobenzolsulfonsäurechlorid, 4-Chlor-3-nitro-benzolsulfonamid, 2-Chlor-5-nitrobenzolsulfonsäurechlorid, Natrium-2-methyl-5-nitrobenzol-sulfonat, 5-Nitro-1-naphthalinsulfonsäure, Ammonium-5-nitro-2-naphthalinsulfonat.

Polynitroverbindungen im Sinne der Erfindung sind z.B. m-Dinitrobenzol, p-Dinitrobenzol, 4-Methyl-1,3-dinitrobenzol, 4-Ethyl-1,3-dinitrobenzol, 3-Methyl-1,4-dinitrobenzol, 3-Isopropyl-1,4-dinitrobenzol, 4-Isopropyl-1,3-dinitrobenzol, 3,5-Dinitrobenzoesäure, 3,4-Dinitrobenzoesäure, 3,5-Dinitrobenzoesäureethylester, 3,5-Dinitrobenzoesäureisopropylester, 3,5-Dinitrobenzosäure hexylester, 3,5-Dinitrobenzoesäuredodecylester, 3,5-Dinitrobenzoesäureoctadecylester, 3,5-Dinitrobenzoesäurebehenylester (behenyl = $C_{22}$-Alkylrest), 3,5-Dinitrobenzoesäureamid, 3,5-Dinitrobenzoesäurebutylamid, 3,5-Dinitrobenzoesäurehexylamid, 3,5-Dinitrobenzoesäuredodecylamid, 3,5-Dinitrobenzoesäureoctadecylamid, 3,5-Dinitrobenzoesäurebehenylamid (behenyl = $C_{22}$-Alkylrest), 3,5-Dinitrobenzoesäurediethylamid, 3,5-Dinitrobenzoesäure-(2-hydroxy)ethylester, 3,5-Dinitrobenzoesäure-(2-hydroxy-1-methyl)ethylester, Essigsäure-(2,4-dinitro)anilid, Propionsäure-(2,4-dinitro)anilid, Oxalsäure-bis(3-nitro)anilid, Oxalsäure-bis(4-nitro)anilid, Oxalsäure-bis(2,4-dinitro)anilid, Bernsteinsäure-bis(4-nitro)anilid, Adipinsäure-bis(4-nitro)anilid, Azelainsäure-bis(4-nitro)anilid, Sebacinsäure-bis(4-nitro)anilid, Dodekandicarbonsäure-bis(4-nitro)anilid, Adipinsäure-bis(2,4-dinitro)anilid, Mono- und Dinitroanilide dimerer oder polymerer Fettsäuren, 4-Nitrobenzoesäure-(4-nitro)phenolat, 3-Nitrobenzoesäure-(4-nitro)phenolat, 4-Nitrobenzoesäure-(4-nitro)anilid, 3-Nitrobenzoesäure-(4-nitro)anilid, 3-Nitrobenzoesäure-(4-nitro)-N-methylanilid, 3-Nitrobenzoesäure-(4-nitro)-N-phenylanilid, Terephthalsäure-4,4′-bis-4-nitroanilid, Isophthalsäure-4,4′-bis-nitroanilid, 1,4-Bis-(4-nitro)-benzoyl-1,4-phenylendiamin, 2,2′-Isopropyliden-bis(4-nitrophenyloxy)benzol, 1,5-Dinitronaphthalin, 1,8-Dinitronaphthalin, 1,3-Dinitronaphthalin, 1,3-Dinitroanthracen, 1,5-Dinitroantracen, 1,8-Dinitroanthracen, 4,4′-Dinitrobiphenyl, 4,4′-Dinitrodiphenylsulfon, 3,3′-Dinitrodiphenylsulfon, 3,3′-Dinitrodiphenylether, 4,4′-Dinitrodiphenylether, 4,4′-Dinitrodiphenylsulfid, 4,4′-Dinitrodiphenylsulfoxid, 3,3′-Dinitrobenzophenon, 4,4′- Dinitrobenzophenon, 4,4′-Dinitrodiphenylmethan, 2,2′-Isopropyliden-bis(4-nitro)benzol, 2,4-Dinitrophenol, 1-Methoxy-5-methyl-2,4-dinitrobenzol, 3,4-Dinitrobenzamid, 3,4-Dinitrobenzphenolat, 3,4-Dinitrobenzoesäuremethylester, Bis(4-nitro)benzoyl-1,6-hexamethylendiamin, Bis(4-nitro)benzoyl-1,2-ethylendiamin, Bis(4-nitro)-benzoyl-1,4-tetramethylendiamin, Bis(3,5-dinitro)benzoyl-1,6-hexamethylendiamin, Bis(4-nitro)benzoyl-1,2-ethylenglykol, Bis(4-nitro)benzoyl-1,4-butandiol, Bis(4-nitro)benzoyl-1,6-hexandiol, Bis(4-nitro)-benzoylhydrochinon, Bis(4-nitro)benzoylresorcin, Bis(3,5-dinitro)benzoyl-1,2-ethylenglykol, Bis(3,5-dinitro)-benzoyl-butandiol, Bis(3,5-dinitrobenzoyl)-1,6-hexandiol, 1,4-Bis(4-nitro)benzoyl-butan, Phosphorsäure-tris-(4-nitrophenyl)ester, Thiophosphorsäure-tris-(4-nitrophenyl)ester, 1-Methoxy-2,4-dinitrobenzol, 1-Ethoxy-2,4-dinitrobenzol, 1-Methoxy-5-methyl-2,4-dinitrobenzol, 4-Methyl-2,6-dinitrophenol, 2,4-Dinitro-1-naphthol, 2-Hydroxy-3,5-dinitrobenzoesäure, 2-Methoxy-3,5-dinitrobenzonitril, 4-Hydroxy-3,5-dinitrobenzoesäure, Natrium-2,4-dinitrobenzolsulfonat, Natrium-2-methyl-3,5-dinitrobenzolsulfonat.

Bevorzugte Nitroverbindungen sind solche, die neben der oder den Nitrogruppen noch einen oder mehrere elektronenanziehende Reste wie z.B. Estergruppen, Amidgruppen oder Carboxylgruppen aufweisen.

Die Nitroverbindungen können einzeln oder im Gemisch eingesetzt werden.

Die Reaktionszeit in der Schmelze beträgt 30 sec bis 600 min, bevorzugt 1 bis 100 min.

Die Temperatur, welche zur Herstellung der erfindungsgemäß erhaltenen Arylensulfidpolymeren geeignet ist, beträgt ca. 290 bis 450 °C, bevorzugt 300 bis 360 °C.

In einer besonderen Ausführung der Erfindung können durch Reaktion in fester Phase auch Granulat oder Formkörper aus den erfindungsgemäßen Arylensulfidpolymeren bei Temperaturen von 180 bis 260 °C, bevorzugt von 220 bis 260 °C, nachbehandelt werden. Die Reaktionszeit hierfür beträgt 0,5 bis 20 Stunden, vorzugsweise 1 bis 15 Stunden.

Die erfindungsgemäßen Arylensulfidpolymeren können unter Inertgasatmosphäre (z.B. $N_2$) oder unter Luft, in einem Druckbereich von $10^{-2}$ bis $10^3$ bar hergestellt werden.

Die erfindungsgemäßen Arylensulfidpolymeren können Zusätze wie z.B. Verstärkungsmaterialien (Glasfasern, mineralische Füllstoffe u.a..), Ruß, Weichmacher, Stabilisatoren, Pigmente, Nukleierungsmittel, Entformungsmittel u.s.w. enthalten.

Die erfindungsgemäß hergestellten Arylensulfidpolymeren, vorzugsweise Polyphenylensulfide eignen sich zur Herstellung von geformten Körpern und zur Verarbeitung nach den Verfahren des Spritzgießens, der Extrusion u.a. zu Formkörpern, Folien, Halbzeug, Fasern, Monofilen, Filamenten, flächigen Geweben usw.

Sie können zusätzlich zu der erhöhten Schmelzviskosität den Vorteil einer erhöhten Beständigkeit gegen UV-Strahlung aufweisen. Eine Methode zur Bestimmung des Ausmaßes der Bindungsbrüche durch UV-Licht ist die Messung der Radikalkonzentration unter Bestrahlung, z.B. durch ESR-Spektroskopie.

## Beispiele

### Beispiel 1

In einem 250 ml Rundkolben wurden 50 g PPS-Granulat mit einer Schmelzviskosität von 18 Pas bei 320 °C und einem Schergefälle von ca. 1-10 $s^{-1}$ mit 5,5 g (10 Gew.-%) 3,5-Dinitrobenzoesäure-(2-hydroxyethylester) vermischt und unter $N_2$ auf 320 °C erhitzt. Nach Aufschmelzen des Gemisches wurde noch weitere 30 min lang bei dieser Temperatur gerührt. Nach Beendigung der Reaktion wurde das Heizbad entfernt, der Kolben herabgenommen und das PPS nach Erkalten gehäckselt. Die Schmelzviskosität betrug 102 Pas (580 % des Ausgangswerts; im folgenden z.B. nur noch durch die Angabe +580 % bezeichnet).

Nach 12-minütiger Scherung (ca. 1-10 $s^{-1}$, 320 °C) betrug die Schmelzviskosität 1450 Pas (+ 8000 %).

### Beispiel 2

In der in Beispiel 1 beschriebenen Weise wurde PPS mit 10 Gew.-% 1,3-Dinitrobenzol nachbehandelt. Die Schmelzviskosität des PPS betrug 62 Pas (+ 340 %). Nach 12-minütiger Scherung (ca. 10 $s^{-1}$, 320 °C) betrug die Schmelzviskosität 124 Pas (+ 690 %).

### Beispiel 3

In der in Beispiel 1 beschriebenen Weise wurde PPS mit 10 Gew.-% 4,4′-Dinitrobenzanild nachbehandelt. Die Schmelzviskosität betrug 35 Pas (+ 195 %).

### Beispiel 4

In der in Beispiel 1 beschriebenen Weise wurde PPS mit 10 Gew.-% 2,2′-Isopropyliden-bis(4-nitrophenyloxy)benzol nachbehandelt. Die Schmelzviskosität betrug 29 Pas (+ 160 %).

### Beispiel 5

In der in Beispiel 1 beschriebenen Weise wurde PPS (SV = 12 Pas, 10 $s^{-1}$, 320 °C) mit 10 Gew.-% 1,4-Bis-(4-nitrobenzoyl)-1,4-phenylendiamin nachbehandelt. Die Schmelzviskosität betrug 70 Pas (+ 580 %).

### Beispiel 6

In der in Beispiel 1 beschriebenen Weise wurde PPS (SV = 24 Pas, ca. 1-10 $s^{-1}$, 320 °C) mit 10 Gew.-% 3-Nitrobenzolsulfonamid nachbehandelt. Die Schmelzviskosität betrug 85 Pas (+ 350 %).

### Beispiel 7

In der in Beispiel 1 beschriebenen Weise wurde PPS (SV = 44 Pas, 1000 $s^{-1}$, 310 °C) mit 10 Gew.-% Natrium-3-nitrobenzolsulfonat nachbehandelt. Die Schmelzviskosität betrug 150 Pas (+ 340 %).

### Beispiel 8

In der in Beispiel 1 beschriebenen Weise wurde PPS mit einer Schmelzviskosität von 38 Pa.s bei 320 °C und einem Schergefälle von 2,26 $s^{-1}$ mit 10 Gew.-% 4-Nitrodiphenylamin nachbehandelt. Die Schmelzviskosität des PPS betrug 190 Pas (+ 500 %) bei 2,26 $s^{-1}$.

Vergleichsbeispiel 1

In der in Beispiel 1 beschriebenen Weise wurde PPS ohne den Zusatz einer der erfindungsgemäßen Nitroverbindungen nachbehandelt. Die Schmelzviskosität änderte sich durch dieses Verfahren nicht.

Vergleichsbeispiel 2

In der in Beispiel 1 beschriebenen Weise wurde PPS (SV = 44 Pas, 1000 $s^{-1}$, 310 °C) mit 10 Gew.-% Natriumbenzolsulfonat nachbehandelt. Die Schmelzviskosität betrug 25 Pas.

Die Beispiele zeigen, daß die erfindungsgemäß einzusetzenden Nitroverbindungen sehr gut dazu geeignet sind, das Molekulargewicht von Arylensulfidpolymeren durch Nachbehandlung zu erhöhen.

Beispiel 9

In der in Beispiel 1 beschriebenen Weise wurde das in Bsp. 8 benutzte PPS-Granulat mit 10 Gew.-% 4,4′-Dinitrotriphenylamin nachbehandelt. Die Schmelzviskosität betrug ca. 600 Pa.s (+1600 %).

Nach 16 minütiger Scherung hei 320 °C und ca. 2 $s^{-1}$ betrug die Schmelzviskosität ca. 1700 Pa.s (+ 4500 %).

Beispiel 10

In der in Bsp. 1 beschriebenen Weise wurde das in Bsp. 8 benutzte PPS-Granulat mit 5 % 3,5-Dinitrobenzoesäurestearylamid nachbehandelt. Die Schmelzviskosität betrug 71 Pa.s (+185 %) (10 $s^{-1}$).

Beispiel 11 und 12

In der in Bsp. 1 beschriebenen Weise wurde das in Bsp. 8 benutzte PPS-Granulat mit 1 (Bsp. 11) und 2 % (Bsp. 12) 4,4′-Dinitrobenzphenolat nachbehandelt. Die Schmelzviskosität betrug 180 Pa.s (+ 470 %; Bsp. 11) bzw. 300 Pa.s (+790 % Bsp. 12).

Nach 16 minütiger Scherung (Bsp. 12) betrug die Schmelzviskosität 580 Pa.s (+1500 %).

Beispiel 13

Das in Bsp. 2 erhaltene hochmolekulare PPS wurde in fester Phase unter $N_2$ 7 h lang auf 250 °C erhitzt. Die Schmelzviskosität stieg dadurch von 62 Pa.s auf 380 Pa.s (+ 610 %).

Beispiel 14

Von einem nach Beispiel 10 erhaltenen Schmelzkörper schabt man mit einem Korundschaber PPS-Flocken ab und füllt sie in ein ESR-Röhrchen (Durchmesser 3 mm). Nach einer Zeit von einigen Tagen bestrahlt man unter Luft bei -110 °C mit einer 500 W-Hg-Lampe, deren kurzwelliger Anteil (305 nm) herausgefiltert wurde. Die niedrige Temperatur verhindert die Weiterreaktion der durch die Bestrahlung erzeugten Radikale.

Die Differenz der in 60 Minuten minus der in 30 Minuten gebildeten Radikale wird als Maß für die Radikalbildungsgeschwindigkeit gewählt. Differenz: O (Relativzahlen). Die Messung kann z.B. mit ESR-Spektroskopie erfolgen.

Vergleichsbeispiel 3

In derselben Weise wird die Radikalbildungsgeschwindigkeit von PPS bestimmt. Differenz: 184 (Relativzahlen).

## Ansprüche

1. Hochmolekulare Arylensulfidpolymere, hergestellt durch Umsetzung in der Schmelze von 80-99,9, bevorzugt 85-99,5 und besonders bevorzugt 88-99 Gew.-% Arylensulfidpolymeren aus Bausteinen der Formeln (I)-(V),

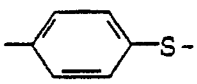 ,

(I)

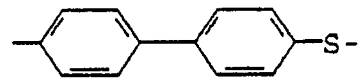 ,

(II)

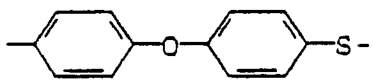 ,

(III)

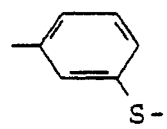 ,

(IV)

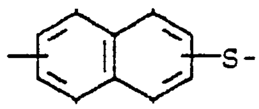 ,

(V)

die ggf. auch noch weitere Comonomere enthalten können, bevorzugt das Homopolymere des Bausteins (I) (Polyparaphenylensulfid, PPS) mit 0,1-20, bevorzugt 0,5-15, besonders bevorzugt 1-12 Gew.-%, hochsiedender aromatischer, vorzugsweise halogenfreier Polynitroverbindungen und/oder Mono nitroverbindungen, welche mindestens einen weiteren, zur Reaktion mit dem Arylensulfidpolymeren befähigten Substituenten aufweisen und gegebenenfalls weiterer Festphasennachbehandlung bei erhöhter Temperatur, wobei die Siedepunkte der Nitroverbindungen mindestens 250 °C und bevorzugt mindestens 300 °C betragen sollen und wobei für den Fall, daß in den Mononitroverbindungen der weitere, zur Reaktion mit dem Arylensulfidpolymeren befähigte Substituent eine $-SO_3^{\ominus}$-Gruppe ist, nur 3-Nitrobenzolsulfonsäure-Natriumsalz, 3-Nitrobenzolsulfonsäure-Kalium-Salz, 3-Nitrobenzolsulfonsäure-Calcium-Salze, 3-Nitrobenzolsulfonsäure-Magnesium-Salze, 2-Nitro-benzolsulfonsäure-Kalium-Salz, 2-Nitrobenzolsulfonsäure-Natrium-Salz, 2-Methyl-5-nitrobenzolsulfonsäure-Natrium-(Kalium)-Salz, 4-Methyl-3-nitrobenzolsulfonsäure-Natrium-(Kalium)-Salz, 5-Nitro-2-naphthalinsulfonsäure-Natrium-(Kalium, Ammonium)-Salz eingesetzt werden.

2. Arylensulfidpolymere nach Anspruch 1, dadurch gekennzeichnet, daß die Mononitroverbindungen als weiteren, zur Reaktion mit dem Arylensulfidpolymeren befähigten Substituenten Reste wie $-SO_3H$, $-SO_2Cl$, -SH, $-NO_2$, $-SO_2NH_2$, $-SO_3^{\ominus}K^{\oplus}$, $-SO_3^{\ominus}Na^{\oplus}$, -NHAr, wobei Ar einen gegebenenfalls substituierten Aryl-Rest mit 6-14 C-Atomen wie z.B. den Phenyl-Rest bedeutet, enthalten.

3. Arylensulfidpolymere nach Anspruch 1, dadurch gekennzeichnet, daß die Nitroverbindungen einen oder mehrere elektronenanziehende Substituenten aufweisen wie bevorzugt Ester, Amid und Carboxylgruppen.

4. Arylensulfidpolymere nach Anspruch 1, dadurch gekennzeichnet, daß die Festphasennachbehandlung bei Temperaturen von 180-260 °C, bevorzugt 220-260 °C durchgeführt wird.

5. Verwendung von Arylensulfidpolymeren nach Anspruch 1 zur Herstellung von Folien und Formkörpern.

6. Verwendung von Arylensulfidpolymeren nach Anspruch 1 zur Herstellung von Fasern, Monofilen, Filamenten und flächigen Geweben.